# FASCICULE DE BREVET EUROPEEN

(11) **EP 2 492 539 B1**
(45) Date de publication et mention de la délivrance du brevet: **09.10.2013**
(21) Numéro de dépôt: 12156897.6
(22) Date de dépôt: 24.02.2012
(51) Int. Cl.: F16F 15/121, F16F 15/123

(54) **Amortisseur de torsion pour un embrayage**
Torsionsdämpfer für eine Kupplung
Torsion damper for a clutch

(30) Priorité: 25.02.2011 FR 1151532
(43) Date de publication de la demande: 29.08.2012
(73) Titulaire: Valeo Embrayages, 80009 Amiens (FR)
(72) Inventeur: Verhoog, Roel, 60190 Gournay Sur Aronde (FR); Hennebelle, Michaël, 62150 Houdain (FR)

(56) Documents cités:
- DE-A1- 3 721 710
- GB-A- 2 194 021
- US-A- 5 030 167
- US-A- 5 242 328
- US-A- 5 382 193

## Description

La présente invention concerne un amortisseur de torsion pour un disque d'embrayage ou un double volant amortisseur, en particulier de véhicule automobile.

Un tel amortisseur avec les caractéristiques du préambule de la revendication indépendante 1 est divulgué dans le document US 5 030 167 A1.

Un amortisseur de torsion comprend un moyeu couplé en rotation à un voile annulaire radial, deux rondelles de guidage qui s'étendent radialement de part et d'autre du voile annulaire et qui sont reliées fixement entre elles et sont mobiles en rotation par rapport au moyeu et au voile annulaire, et des organes élastiques et des moyens de friction montés entre les rondelles de guidage et le voile annulaire pour absorber et amortir les vibrations et les acyclismes de rotation.

Le moyeu est généralement couplé à un arbre d'entrée d'une boite de vitesses et un disque d'embrayage équipé de garnitures de friction ou un volant d'inertie est couplé aux rondelles de guidage.

Les organes élastiques sont le plus souvent des ressorts hélicoïdaux agencés circonférentiellement entre le voile annulaire et les rondelles de guidage. Le débattement angulaire maximal entre le voile et les rondelles de guidage est atteint lorsque les spires des ressorts sont jointives. Si le couple transmis par l'amortisseur de torsion est trop important, les spires subissent un écrasement provoquant une fatigue et une usure prématurée des ressorts.

Afin d'éviter cela, la demande de brevet FR 2 514 446, au nom de la Demanderesse, propose de limiter le débattement angulaire entre le voile et les rondelle de guidage dans les deux sens de rotation, respectivement le sens direct et le sens rétro. Pour cela, des ouvertures oblongues sont ménagées dans l'une des rondelles de guidage et des ergots s'étendent au travers desdites ouvertures, à partir de la périphérie externe du voile. Le débattement est ainsi limité par butée des ergots contre chacune des extrémités des ouvertures.

De cette manière, au-delà d'un couple déterminé et quel que soit le sens de rotation, les ergots viennent en butée contre les extrémités des ouvertures et le couple est transmis directement des rondelles de guidage au voile.

En fonction des applications, notamment du type de moteur utilisé, les raideurs des organes élastiques peuvent être modifiées, ainsi que le débattement angulaire entre le voile et les rondelles de guidage. Pour cela, il convient de changer d'organes élastiques et d'adapter la position des butées. En outre, l'angle d'attaque des organes élastiques peut être différent d'une application à l'autre.

L'angle d'attaque d'un organe élastique, en particulier d'un ressort, est l'angle formé entre l'extrémité de l'organe élastique et la surface d'appui correspondante du voile annulaire ou de la rondelle de guidage, dans la position la moins contrainte de l'organe élastique. Au fur et à mesure que l'organe élastique est contraint, c'est-à-dire comprimé, l'angle précité est réduit, jusqu'à ce que l'extrémité du ressort prenne complètement appui contre la surface correspondante.

Il est donc nécessaire de disposer de ressorts, d'un voile annulaire et de rondelles de guidage spécifiques à chaque application, ce qui est particulièrement onéreux.

L'invention a notamment pour but d'apporter une solution simple, efficace et économique à ces problèmes.

A cet effet, elle propose un amortisseur de torsion pour un embrayage, en particulier de véhicule automobile, comprenant un moyeu couplé à un voile annulaire radial, deux rondelles de guidage s'étendant radialement de part et d'autre du voile annulaire, reliées fixement entre elles et mobiles en rotation par rapport au moyeu et au voile annulaire, et des organes élastiques et des moyens de friction montés entre les rondelles de guidage et le voile annulaire pour absorber et amortir les vibrations et les acylismes de rotation, l'amortisseur de torsion comprenant en outre des pièces rapportées sur au moins l'une des rondelles de guidage montées circonférentiellement entre les organes élastiques, chaque pièce rapportée comprenant deux sièges d'appui des extrémités des organes élastiques correspondants, ledit amortisseur de torsion étant remarquable en ce que des butées de fin de course de compression des organes élastiques dans les deux sens de rotation « direct » et « rétro » sont formées sur les pièces rapportées.

De cette manière, pour différentes applications, il est possible d'utiliser les mêmes rondelles de guidage, ce qui permet de réduire les coûts.

En outre, en cas d'usure des pièces rapportées, celles-ci peuvent être aisément remplacées.

De plus, la position des butées, et donc le débattement angulaire entre le voile et les rondelles de guidage, peuvent être adaptés d'une application à une autre, par simple changement des pièces rapportées. Un même voile annulaire peut ainsi être utilisé pour différentes applications.

Selon une forme de réalisation de l'invention, l'amortisseur comprend n pièces rapportées sur une des rondelles de guidage, n étant le nombre d'organes élastiques, et n pièces rapportées sur l'autre des rondelles de guidage, chaque pièce rapportée comportant une butée de fin de course.

Selon une autre forme de réalisation de l'invention, l'amortisseur comprend n pièces rapportées sur une seule des rondelles de guidage, n étant le nombre d'organes élastiques, chaque pièce rapportée comportant une butée de fin de course de compression dans le sens « direct » et une butée de fin de course de compression dans le sens « rétro ».

Le voile annulaire comporte 2n butées de fin de course, chacune de ces butées coopérant avec une butée de fin de course dans le sens « direct » ou avec une butée de fin de course dans le sens « rétro » d'une pièce rapportée.

L'utilisation de deux séries de butées distinctes pour les deux sens de rotation permet d'augmenter de manière importante le débattement possible entre les rondelles de guidage et le voile annulaire.

Les butées du voile annulaire sont avantageusement formées d'une seule pièce avec le voile et les pièces rapportées peuvent être rivetées sur la ou les rondelle de guidage.

Préférentiellement, les pièces rapportées comportent des sièges d'appui des extrémités des organes élastiques.

En particulier, les pièces rapportées peuvent comporter des bords radiaux formant les sièges d'appui des extrémités des organes élastiques.

Ces bords radiaux des pièces rapportées forment un angle d'attaque prédéterminé avec les extrémités correspondantes des organes élastiques, cet angle étant par exemple compris entre 3 et 20 °.

Ainsi, le changement des pièces rapportées pour une adaptation de l'amortisseur à un moteur de puissance différente, permet aussi une adaptation de l'angle d'attaque des organes élastiques.

De manière préférée, les pièces rapportées sont identiques entre elles, ce qui permet encore de réduire les coûts.

L'amortisseur selon l'invention est adaptable à des moteurs de puissances différentes par simple changement des organes élastiques et des pièces rapportées sur les rondelles de guidage, le voile annulaire restant le même pour les différents moteurs.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un amortisseur de torsion selon l'invention, dans lequel l'une des rondelles de guidage a été retirée ;
- la figure 2 est une vue partielle et en coupe transversale à plus grande échelle de l'amortisseur de torsion selon l'invention ;
- les figures 3 et 4 sont des vues de dessus du voile de liaison et des pièces rapportées, respectivement en position de repos et en position de débattement maximal de l'amortisseur de torsion ;
- la figure 5 est une vue en perspective du voile et d'une pièce rapportée, selon une variante de réalisation de l'invention ;
- la figure 6 est une vue correspondant à la figure 5, pour une autre variante de réalisation;
- la figure 7 est une vue en perspective du voile et de trois pièces rapportées, selon une autre variante de réalisation de l'invention.

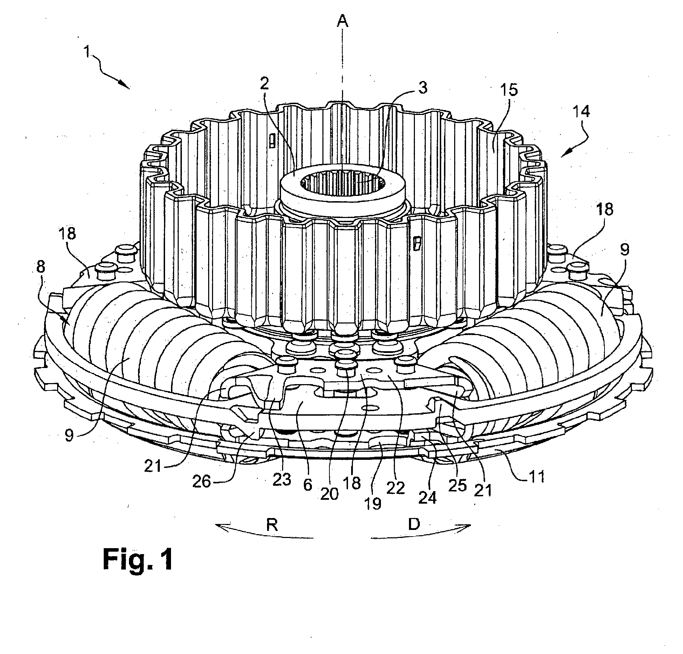

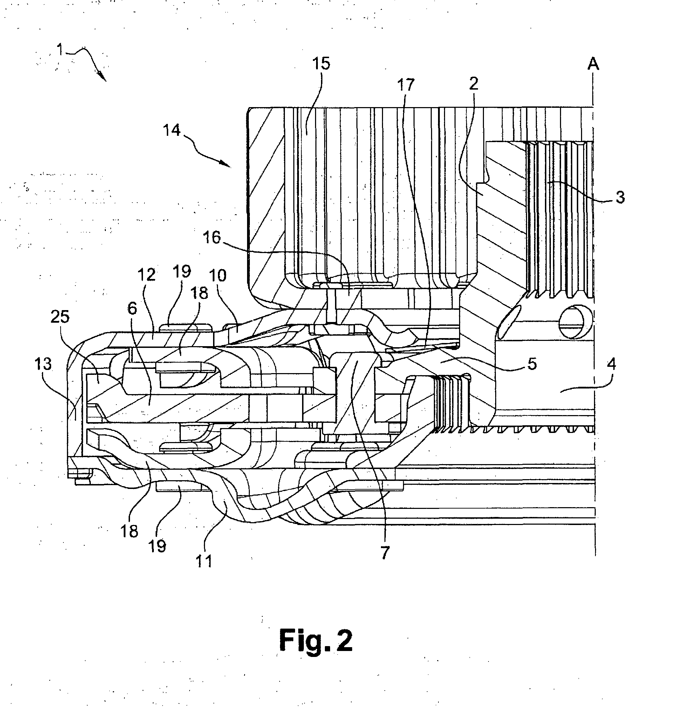

Les figures 1 et 2 représentent un amortisseur de torsion 1 pour un disque d'embrayage, en particulier de véhicule automobile, comprenant un moyeu central cylindrique 2 d'axe A dont la surface intérieure comporte une première partie cannelée 3 pour sa liaison avec un arbre mené, tel que l'arbre d'entrée d'une boite de vitesses d'un véhicule, la première partie cannelée 3 étant prolongée par une seconde partie lisse 4, de diamètre plus important. Une collerette annulaire 5 s'étend radialement vers l'extérieur depuis la seconde partie 4 du moyeu 2.

Un voile annulaire radial 6 sensiblement plan est monté autour du moyeu 2 et prend appui axialement contre la collerette 5. Le voile 6 est fixé à cette collerette 5 par l'intermédiaire de rivets 7. Le voile 6 comporte trois fenêtres 8, destinées au logement de ressorts hélicoïdaux 9 de compression, au nombre de trois dans l'exemple représenté, qui s'étendent circonférentiellement et sont répartis autour de l'axe A.

L'amortisseur de torsion 1 comporte en outre une première et une seconde rondelles de guidage 10, 11, disposées de part et d'autre du voile annulaire 6. La première rondelles de guidage 10, située du côté de la première partie 3 du moyeu 2, comporte une partie annulaire 12 sensiblement radiale, prolongée par une collerette cylindrique 13 s'étendant sensiblement axialement jusqu'à la seconde rondelle de guidage 11. Cette dernière est de forme annulaire et s'étend sensiblement radialement.

La première rondelle de guidage 10 est sertie, à l'extrémité axiale de la collerette 13, sur la périphérie externe de la seconde rondelle de guidage 1, de façon à former, avec cette seconde rondelle de guidage 11 un logement pour les ressorts 9. Ce logement est susceptible de retenir un lubrifiant visqueux, tel que de la graisse ou de l'huile, autour des ressorts 9, empêchant notamment ce lubrifiant de s'échapper sous l'effet d'une force centrifuge.

Un organe de liaison 14 est en outre fixé sur la face externe de la première rondelles de guidage 10 autour du moyeu 2. L'organe de liaison 14 comporte une partie 15 globalement cylindrique présentant des cannelures axiales, et à une extrémité un rebord annulaire radial 16 fixé par des rivets à la première rondelles de guidage 10. L'organe de liaison 14 est destiné à être couplé en rotation à un « lock-up » d'un convertisseur de couple.

Des moyens de friction 17 sont disposés entre la première rondelle de guindage 10 et le moyeu 2.

L'amortisseur de torsion 1 comporte ainsi deux parties mobiles l'une par rapport à l'autre, aptes à pivoter sur une plage angulaire déterminée, à savoir les rondelles de guidage 10, 11 et l'organe de liaison 14 d'une part et le voile annulaire 6 et le moyeu 2 d'autre part.

Les ressorts 9 et les moyens de friction 17 permettent, comme cela est connu en soi, d'absorber et d'amortir les vibrations et les acyclismes de rotation.

On s'intéressera dans ce qui suit à la limitation du débattement angulaire entre les deux parties mobiles précitées et à l'appui des ressorts.

Comme cela est visible aux figures 1 à 4, deux groupes de trois pièces rapportées 18, 19 en forme de secteur angulaire sont fixés sur les rondelles de guidage, de part et d'autre du voile annulaire 6, par l'intermédiaire de rivets 20. Les pièces rapportées 18, 19 se présentent sous la forme de pièces en tôle formées à la presse et sont montées circonférentiellement entre les ressorts 9.

Plus particulièrement, dans la forme de réalisation des figures 1 à 4, chaque pièce rapportée 18, 19 comporte deux bords latéraux 21 recourbés vers l'intérieur, c'est-à-dire en direction du voile annulaire, ainsi qu'une zone médiane 22 sensiblement plane et fixée à la rondelle de guidage correspondante 10, 11. Les rebords 21 peuvent s'étendre radialement ou former un angle compris entre 15 et 35° avec la direction radiale

Les pièces rapportées 18, 19 fixées sur les rondelles de guidage sont axialement alignées deux par deux, comme on le voit sur les figures 1, 3 et 4. Ainsi, chaque ressort 9 peut prendre appui à chaque extrémité sur les bords latéraux recourbés 21 des deux pièces rapportées 18, 19 alignées axialement et fixées l'une sur une rondelle de guidage et l'autre sur l'autre rondelle de guidage.

Bien entendu, les ressorts 9 peuvent également prendre appui en fonctionnement sur les extrémités des fenêtres 8 du voile annulaire 6, comme dans l'art antérieur.

La zone médiane 22 de chaque pièce rapportée présente des périphéries radialement interne et externe qui sont incurvées. Sa périphérie radialement externe comporte une patte 23, 24 pliée vers l'intérieur, c'est-à-dire en direction du voile annulaire 6, pour former une butée de fin de course.

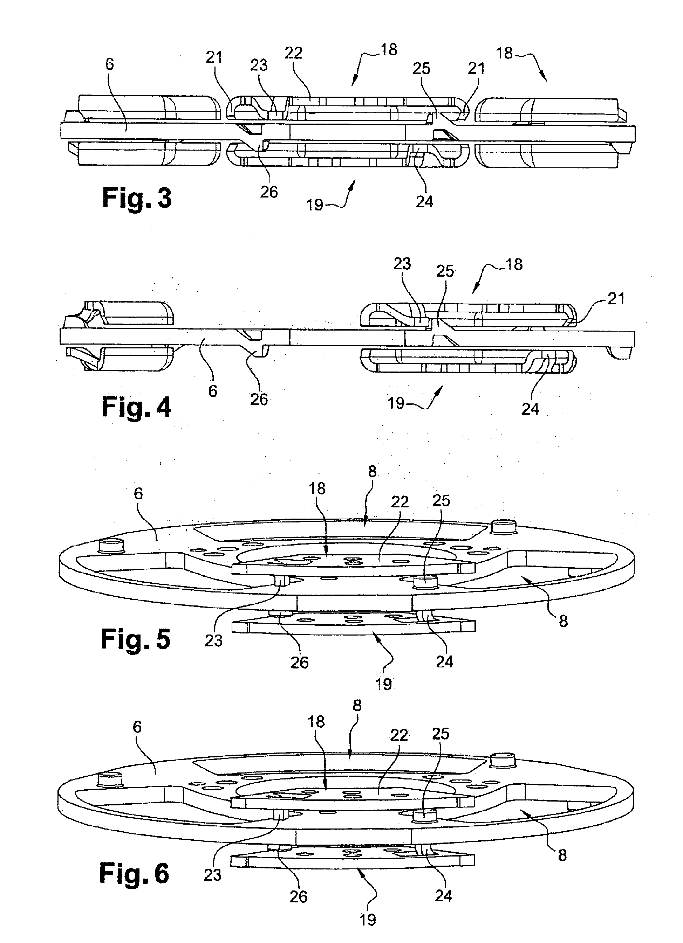

La périphérie externe du voile annulaire 6 comprend des plots en saillie 25, 26 qui s'étendent axialement de part et d'autre du voile 6 et sont obtenus par déformation. Plus particulièrement, le voile annulaire 6 comporte trois plots 25 s'étendant en direction de la première rondelle 10, régulièrement répartis sur la périphérie externe et destinés à former des butées coopérant avec les pattes 23 de trois pièces rapportées 18 fixées sur la première rondelle 10, de manière à limiter le débattement angulaire entre la rondelle de guidage 10 et le voile de liaison 6 dans un premier sens de rotation, appelé ci-après sens direct (flèche D en figure 1). On définit comme première position extrême la position de la figure 4 dans laquelle les pattes 23 des pièces rapportées 18 fixées à la première rondelle de guidage 10 sont en butée contre les plots 25 correspondants.

Le voile annulaire 6 comporte en outre trois plots 26 s'étendant en direction de la seconde rondelle 11, régulièrement répartis sur la périphérie externe et destinés à former des butées coopérant avec les pattes 24 de trois pièces rapportées 19 fixées sur la seconde rondelle de guidage 11, de manière à limiter le débattement angulaire entre la rondelle de guidage 11 et le voile de liaison 6 dans un second sens de rotation, appelé ci-après sens rétro (flèche R en figure 1). On définit comme seconde position extrême la position dans laquelle les pattes 24 des pièces rapportées 19 fixées à la seconde rondelle de guidage 11 sont en butée contre les plots correspondants 26.

Les positions des pattes 23, 24 et des plots 25, 26 sont déterminées de façon à ce que le débattement angulaire maximal entre les deux positions extrêmes précitées soit compris entre 20 et 80°, dans le cas d'un amortisseur à trois ressorts disposés sur le même rayon par exemple. Le débattement angulaire maximal est proche de l'angle formé entre les deux extrémités adjacentes de deux ressorts successifs.

On définit par position de repos la position de l'amortisseur 1 dans laquelle les organes élastiques 9 sont sensiblement non contraints. Cette position de repos est celle représentée aux figues 1 et 3.

Le débattement, entre les rondelles de guidage 10, 11 et le voile annulaire 6, entre la position de repos et la première position extrême est égal au débattement entre la position de repos et la seconde position extrême. La somme de ces deux débattements est égale au débattement angulaire total. Ces deux débattements peuvent toutefois être différents, en fonction des applications.

La position des butées 24, 25, 26, et donc le débattement entre le voile 6 et les rondelles de guidage 10, 11, peuvent être adaptés facilement d'une application à une autre, par simple changement des pièces rapportées 18, 19, dans le cas où les butées sont formées sur les pièces rapportées.

Bien entendu, les butées pourraient être formées directement sur le voile annulaire, les pièces rapportées servant dans ce cas uniquement à l'appui des extrémités circonférentielles des ressorts.

Chaque pièce rapportée 18, 19 est également caractérisée par un angle d'attaque particulier des ressorts 9, cet angle d'attaque étant déterminé par l'angle fait par chaque bord latéral 21 avec une direction radiale.

De cette manière, pour différentes applications, il est possible d'utiliser le même voile annulaire 6 et les mêmes rondelles de guidage 10, 11, ce qui permet de réduire les coûts.

En outre, l'amortisseur de torsion selon l'invention a un débattement angulaire maximal entre les rondelles de guidage 10, 11 et le voile annulaire 6, grâce à l'utilisation de butées distinctes 23, 24, 25, 26 pour les deux sens de rotation opposés. Il possède également une bonne durée de vie puisque les pièces rapportées 18, 19, qui sont les pièces soumises à une plus grande usure, peuvent être remplacées indépendamment et aisément.

La figure 5 montre une variante de réalisation dans laquelle les pattes 23, 24 des pièces rapportées 18, 19 sont formées par découpage et pliage dans la zone médiane 22, non plus au niveau de la périphérie externe mais en retrait vers l'intérieur. Les pièces rapportées 18, 19 ne comportent en outre plus de bord radial recourbé vers l'intérieur. Les pièces rapportées 18 fixées sur la rondelle de guidage 6 sont alignées axialement avec les pièces de guidage 19 fixées sur l'autre rondelle de guidage. Ainsi, le bord latéral d'une pièce 18 et le bord latéral correspondant d'une pièce 19 qui sont alignés axialement, peuvent former un siège d'appui d'une extrémité d'un ressort 9.

Les plots 25, 26 du voile 6 sont cylindriques et placés radialement sur les trajectoires des pattes 23, 24. Le fonctionnement de l'ensemble reste inchangé, les pattes 23 venant en butée contre les plots 25 dans la première position extrême, lorsque les rondelles de guidage 10, 11 tournent dans le sens direct, et les pattes 24 venant en butée contre les plots 26 dans la seconde position extrême, lorsque les rondelles de guidage 10, 11 tournent dans le sens rétro.

En variante, les butées peuvent être formées non pas par des pattes comme décrit précédemment, mais par des surépaisseurs 23, 24 réalisées par exemple par usinage (figure 6).

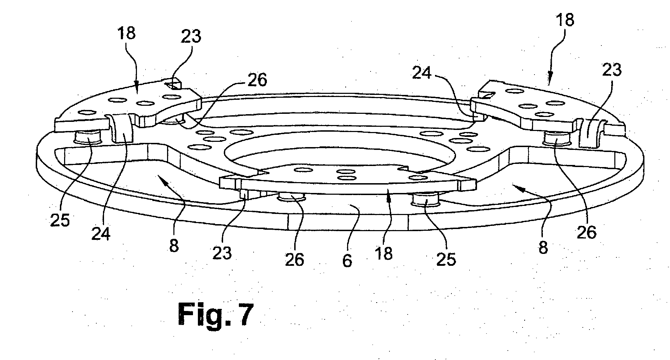

La figure 7 montre encore une autre variante dans laquelle les pièces rapportées sont toutes fixées sur la première rondelles de guidage 10, chaque pièce rapportée 18 comprenant une première patte 23 coopérant avec un plot 25 en saillie du voile 6 pour limiter le débattement dans le sens de rotation direct des rondelles de guidage 10, 11, et une seconde patte 24, décalée circonférentiellement et radialement par rapport à la première patte 23 et coopérant avec un autre plot 25 en saillie du voile 6 pour limiter le débattement dans le sens de rotation rétro.

Les deux pattes 23, 24, et également les deux plots 25, 26, sont situés à des distances différentes de l'axe central A, de sorte que les pattes 23 ne viennent pas buter contre les plots 26, mais uniquement contre les plots 25, et inversement.

Dans cette variante, les pattes 23, 24 sont formées au niveau des bords radiaux des pièces rapportées 18.

En variante également, les pièces rapportées 18, 19 peuvent être fixées au voile annulaire 6, les butées 23, 24 des pièces rapportées coopérant avec des butées des rondelles de guidage 10, 11, de la même manière que précédemment. Dans ce cas, en fonctionnement, les rondelles de guidage 10, 11 comportent des sièges d'appui pour les extrémités des ressorts 9, constitués par exemple par les extrémités circonférentielles de renfoncements formés dans les rondelles de guidage pour le logement des ressorts, comme cela est bien connu dans la technique. Les extrémités des ressorts 9 prennent également appui en fonctionnement sur les bords radiaux 21 des pièces rapportées 18, 19.

## Revendications

1. Amortisseur de torsion (1) pour un embrayage, en particulier de véhicule automobile, comprenant un moyeu (2) couplé à un voile annulaire (6) radial, deux rondelles de guidage (10, 11) s'étendant radialement de part et d'autre du voile annulaire (6), reliées fixement entre elles et mobiles en rotation par rapport au moyeu (2) et au voile annulaire (6), et des organes élastiques (9) et des moyens de friction (17) montés entre les rondelles de guidage (10, 11) et le voile annulaire (6) pour absorber et amortir les vibrations et les acyclismes de rotation, l'amortisseur comprenant en outre des pièces rapportées (18, 19) sur au moins l'une des rondelles de guidage montées circonféréntiellement entre les organes élastiques (9), chaque pièce rapportée (18, 19) comprenant deux sièges d'appui des extrémités des organes élastiques (9) correspondants, ledit amortisseur étant **caractérisé en ce que** des butées (23, 24) de fin de course de compression des organes élastiques (9) dans les deux sens de rotation « direct» (D) et « rétro » (R) sont formées sur les pièces rapportées (18, 19).

2. Amortisseur (1) selon la revendication 1, **caractérisé en ce qu'**il comprend n pièces rapportées (18) sur une des rondelles de guidage (10), n étant le nombre d'organes élastiques (9), et n pièces rapportées (19) sur l'autre des rondelles de guidage (11), chaque pièce rapportée (18, 19) comportant une butée de fin de course (23, 24).

3. Amortisseur (1) selon la revendication 1, **caractérisé en ce qu'**il comprend n pièces rapportées (18) sur une seule des rondelles de guidage (10), n étant le nombre d'organes élastiques (9), chaque pièce rapportée (18) comportant une butée de fin de course de compression (23) dans le sens « direct » et une butée de fin de course de compression (24) dans le sens « rétro ».

4. Amortisseur (1) selon la revendication 2 ou 3, **caractérisé en ce que** le voile annulaire (6) comporte 2n butées de fin de course (25, 26), chacune de ces butées coopérant avec une butée de fin de course (23) dans le sens « direct » (D) ou avec une butée de fin de course (24) dans le sens « rétro » (R) d'une pièce rapportée (18, 19).

5. Amortisseur (1) selon la revendication 4, **caractérisé en ce que** les butées (25, 26) du voile annulaire (6) sont formées d'une seule pièce avec le voile (6).

6. Amortisseur (1) selon l'une des revendications 1 à 5, **caractérisé en ce que** les pièces rapportées (18, 19) sont rivetées sur la ou les rondelles de guidage (10, 11).

7. Amortisseur (1) selon l'une des revendications 1 à 6, **caractérisé en ce que** les pièces rapportées (18, 19) comportent des bords sensiblement radiaux (21) axialement alignés d'une rondelle de guidage à l'autre et formant les sièges d'appui des extrémités des organes élastiques (9).

8. Amortisseur (1) selon la revendication 7, **caractérisé en ce que** les bords sensiblement radiaux (21) des pièces rapportées (18, 19) forment un angle d'attaque prédéterminé avec les extrémités correspondantes des organes élastiques (9).

9. Amortisseur (1) selon l'une des revendications 1 à 8, **caractérisé en ce que** les pièces rapportées (18, 19) sont identiques entre elles.

## Patentansprüche

1. Torsionsdämpfer (1) für eine Kupplung, insbesondere für ein Kraftfahrzeug, umfassend eine an einen radialen ringförmigen Flansch (6) gekoppelte Nabe (2), zwei sich auf beiden Seiten des ringförmigen Flanschs (6) radial erstreckende Führungsscheiben (10, 11), die untereinander fest verbunden und relativ zu der Nabe (2) und zu dem ringförmigen Flansch (6) drehbeweglich sind, und elastische Organe (9) und Reibungsmittel (17), die zwischen den Führungsscheiben (10, 11) und dem ringförmigen Flansch (6) montiert sind, um die Schwingungen und die Drehungleichförmigkeiten aufzunehmen und zu dämpfen, wobei der Dämpfer außerdem an mindestens einer der Führungsscheiben angebrachte Ansatzteile (18, 19) umfasst, die in Umfangsrichtung zwischen den elastischen Organen (9) montiert sind, wobei jedes Ansatzteil (18, 19) zwei Sitze zur Auflage der Enden der entsprechenden elastischen Organe (9) aufweist, wobei der besagte Dämpfer **dadurch gekennzeichnet ist, dass** Anschläge (23, 24) für das Ende des Kompressionsweges der elastischen Organe (9) in den beiden Drehrichtungen "vor" (D) und "zurück" (R) auf den Ansatzteilen (18, 19) ausgebildet sind.

2. Dämpfer (1) nach Anspruch 1, **dadurch gekennzeichnet, dass** er n Ansatzteile (18) an einer der Führungsscheiben (10) umfasst, wobei n die Anzahl der elastischen Organe (9) ist, und n Ansatzteile (19) an der anderen Führungsscheiben (11), wobei jedes Ansatzteil (18, 19) einen Endanschlag (23, 24) umfasst.

3. Dämpfer (1) nach Anspruch 1, **dadurch gekennzeichnet, dass** er n Ansatzteile (18) an einer einzigen der Führungsscheiben (10) umfasst, wobei n die Anzahl der elastischen Organe (9) ist, wobei jedes Ansatzteil (18) einen Anschlag (23) für das Ende des Kompressionsweges in der Richtung "vor" und einen Anschlag (24) für das Ende des Kompressionsweges in der Richtung "zurück" umfasst.

4. Dämpfer (1) nach Anspruch 2 oder 3, **dadurch gekennzeichnet, dass** der ringförmige Flansch (6) 2n Endanschläge (25, 26) aufweist, wobei jeder dieser Endanschläge mit einem Anschlag (23) für das Ende des Weges in der Richtung "vor" (D) oder mit einem Anschlag (24) für das Ende des Weges in der Richtung "zurück" (R) eines Ansatzteils (18, 19) zusammenwirkt.

5. Dämpfer (1) nach Anspruch 4, **dadurch gekennzeichnet, dass** die Anschläge (25, 26) des ringförmigen Flanschs (6) einstückig mit dem Flansch (6) ausgebildet sind.

6. Dämpfer (1) nach einem der Ansprüche 1 bis 5, **dadurch gekennzeichnet, dass** die Ansatzteile (18, 19) an der oder an den Führungsscheiben (10, 11) angenietet sind.

7. Dämpfer (1) nach einem der Ansprüche 1 bis 6, **dadurch gekennzeichnet, dass** die Ansatzteile (18, 19) in etwa radiale Ränder (21) umfassen, die von einer Führungsscheibe zur anderen axial aneinandergereiht sind und die Sitze zur Auflage der Enden der elastischen Organe (9) bilden.

8. Dämpfer (1) nach Anspruch 7, **dadurch gekennzeichnet, dass** die in etwa radialen Ränder (21) der Ansatzteile (18, 19) einen vorbestimmten Angriffswinkel mit den entsprechenden Enden der elastischen Organe (9) bilden.

9. Dämpfer (1) nach einem der Ansprüche 1 bis 8, **dadurch gekennzeichnet, dass** die Ansatzteile (18, 19) miteinander identisch sind.

## Claims

1. Torsion damper (1) for a clutch, in particular a motor vehicle, comprising a hub (2) which is coupled to a radial annular flange (6), two guide washers (10, 11) which extend radially on both sides of the annular flange (6), and are connected integrally to one another and are mobile in rotation relative to the hub (2) and to the annular flange (6), and resilient units (9) and friction means (17) which are fitted between the guide washers (10, 11) and the annular flange (6), in order to absorb and damp the vibrations and acyclical rotations, the damper additionally comprising parts (18, 19) which are added onto at least one of the guide washers which are fitted circumferentially between the resilient units (9), each added-on part (18, 19) comprising two seats for support of the ends of the corresponding resilient units (9), the said damper being **characterised in that** end-of-travel stops (23, 24) for compression of the resilient units (9) in the two directions of rotation "direct" (D) and "reverse" (R) are formed on the added-on parts (18, 19).

2. Damper (1) according to claim 1, **characterised in that** it comprises n parts (18) which are added onto one of the guide washers (10), n being the number of resilient units (9), and n parts (19) which are added onto the other one of the guide washers (11), each added-on part (18, 19) comprising an end-of-travel stop (23, 24).

3. Damper (1) according to claim 1, **characterised in that** it comprises n parts (18) which are added onto only one of the guide washers (10), n being the number of resilient units (9), each added-on part (18) comprising an end-of-travel stop (23) for compression in the "direct" direction and an end-of-travel stop (24) for compression in the "reverse" direction.

4. Damper (1) according to claim 2 or 3, **characterised in that** the annular flange (6) comprises 2n end-of-travel stops (25, 26), each of these stops co-operating with an end-of-travel stop (23) in the "direct" direction (D) or with an end-of-travel stop (24) in the "reverse" direction (R) of an added-on part (18, 19).

5. Damper (1) according to claim 4, **characterised in that** the stops (25, 26) of the annular flange (6) are formed in a single piece with the flange (6).

6. Damper (1) according to one of claims 1 to 5, **characterised in that** the added-on parts (18, 19) are riveted on the guide washer(s) (10, 11).

7. Damper (1) according to one of claims 1 to 6, **characterised in that** the added-on parts (18, 19) comprise substantially radial edges (21) which are axially aligned from one guide washer to the next, and form the seats for support of the ends of the resilient units (9).

8. Damper (1) according to claim 7, **characterised in that** the substantially radial edges (21) of the added-on parts (18, 19) form a predetermined angle of attack with the corresponding ends of the resilient units (9).

9. Damper (1) according to one of claims 1 to 8, **characterised in that** the added-on parts (18, 19) are identical to one another.
